# EUROPÄISCHE PATENTSCHRIFT

(11) **EP 2 668 712 B1**
(45) Veröffentlichungstag und Bekanntmachung des Hinweises auf die Patenterteilung: **20.03.2019**
(21) Anmeldenummer: 12700783.9
(22) Anmeldetag: 18.01.2012
(51) Int. Cl.: H02K 3/28, H02K 3/18

(54) **ELEKTRISCHE MASCHINE UND VERFAHREN ZUM WICKELN EINER WICKLUNG EINER ELEKTRISCHEN MASCHINE**
ELECTRIC MACHINE AND METHOD FOR WINDING A COIL OF AN ELECTRIC MACHINE
MACHINE ÉLECTRIQUE ET PROCÉDÉ POUR BOBINER UN ENROULEMENT D'UNE MACHINE ÉLECTRIQUE

(30) Priorität: 24.01.2011 DE 102011003049
(43) Veröffentlichungstag der Anmeldung: 04.12.2013
(73) Patentinhaber: Brose Fahrzeugteile GmbH & Co. KG, Würzburg, 97076 Würzburg (DE)
(72) Erfinder: KEUL, Stefan, 97288 Theilheim (DE)
(74) Vertreter: Isarpatent
(86) Internationale Anmeldenummer: PCT/EP2012/000196
(87) Internationale Veröffentlichungsnummer: WO 2012/100921

(56) Entgegenhaltungen:
- EP-A2- 1 076 401
- WO-A1-2009/055942
- JP-A- 2003 324 878
- US-A1- 2005 242 677

## Beschreibung

### GEBIET DER ERFINDUNG

Die vorliegende Erfindung betrifft eine elektrische Maschine. Die vorliegende Erfindung betrifft ferner ein Verfahren zum Wickeln einer Spule.

### TECHNISCHER HINTERGRUND

Derartige elektrische Maschinen sind allgemein bekannt und werden in unterschiedlichen Einsatzzwecken und Anwendungen verwendet, beispielsweise in automatisierten Getrieben von Kraftfahrzeugen. Eine solche elektrische Maschine kann zum Beispiel als bürstenloser Permanentmagnetmotor mit einem Stator und einem Rotor mit Magnetpolen ausgebildet sein. Der Stator weist ein- oder mehrphasige, z.B. dreiphasige, Wicklungsstränge auf.

Ständig wachsende Anforderungen, insbesondere in einem Kraftfahrzeug, in Bezug auf ein möglichst geringes Bauvolumen, niedriges Gewicht, hoher Leistungsdichte und gleichzeitig hohem Wirkungsgrad mit geringer Geräuschentwicklung resultieren in der stets vorhandenen Forderung, eine verbesserte elektrische Maschine bereitzustellen.

Aus der US 2005/242677 A1 ist ein Wicklungsverfahren für einen elektrischen Motor bekannt.

Des Weiteren beschreibt die JP 2003 324878 A einen DC-Motor, sein Wicklungsverfahren und einen Kompressor.

### ZUSAMMENFASSUNG DER ERFINDUNG

Vor diesem Hintergrund liegt der vorliegenden Erfindung die Aufgabe zu Grunde, eine verbesserte elektrische Maschine anzugeben.

Erfindungsgemäß wird diese Aufgabe durch eine elektrische Maschine mit den Merkmalen des Patentanspruchs 1 und/oder durch ein Verfahren mit den Merkmalen des Patentanspruchs 4 gelöst.

Demgemäß ist vorgesehen:
- Eine elektrische Maschine, insbesondere bürstenloser Permanentmagnetmotor, mit einem Stator, der mehrere Zähne mit mindestens einem nadelgewickelten Wicklungsstrang aufweist, wobei der mindestens eine Wicklungsstrang mindestens zwei Wicklungen auf benachbarten Zähnen aufweist, die in Reihenschaltung angeordnet sind, wobei die mindestens zwei Wicklungen jeweils mindestens eine Wicklungslage aufweisen, wobei eine Nadelgasse vorgesehen ist, die zwischen den mindestens zwei Wicklungen durch einen Kreuzungsabschnitt der mindestens zwei Wicklungen gebildet ist und die mindestens teilweise gefüllt ist, wobei eine letzte Wicklungslage der mindestens zwei Wicklungslagen um die benachbarten Zähne in Form einer vollendeten Acht herumgewickelt ist, wobei ein Kreuzungsabschnitt in der Nadelgasse durch sich kreuzende erste Kreuzungsabschnitte und zweite Kreuzungsabschnitte gebildet ist.
- Ein Verfahren zum Wickeln einer Spule einer elektrischen Maschine, insbesondere eines bürstenlosen Permanentmagnetmotors, mittels eines Nadelwicklers, mit den Verfahrensschritten: (S0) Bereitstellen einer Spule eines mehrere Zähne aufweisenden Wicklungsträgers, wobei die Spule mindestens zwei Wicklungen auf benachbarten Zähnen aufweist, die in Reihenschaltung angeordnet sind und wobei die mindestens zwei Wicklungen jeweils mindestens eine Wicklungsläge aufweisen; (S1) Herstellen der jeweils mindestens einen Wicklungslage einer ersten der mindestens zwei Wicklungen durch Wickeln eines Wicklungsdrahts um einen ersten Zahn; (S2) Herstellen der jeweils mindestens einen Wicklungslage einer zweiten der mindestens zwei Wicklungen durch Wickeln des Wicklungsdrahts um einen zweiten Zahn; (S3) Herstellen der letzten Wicklungslage durch Wickeln des Wicklungsdrahts sowohl um den zweiten Zahn als auch um den ersten Zahn in Form einer vollendeten Acht, dergestalt, dass der Wicklungsdraht von dem zweiten Zahn mit einem ersten Kreuzungsabschnitt durch eine Nadelgasse wieder zurück in Richtung auf einen Drahtanfang an dem ersten Zahn geführt und im Gegenuhrzeigersinn weiter um den ersten Zahn bis zu der Nadelgasse herumgeführt wird, wobei die Nadelgasse dann von einem zweiten Kreuzungsabschnitt des Wicklungsdrahts durchlaufen wird und der zweite Kreuzungsabschnitt den ersten Kreuzungsabschnitt in der Nadelgasse unter Bildung eines Kreuzungsabschnitts kreuzt und dann weiter im Uhrzeigersinn um den zweiten Zahn zur Vollendung der Form einer Acht gewickelt wird.

Die der vorliegenden Erfindung zugrunde liegende Erkenntnis/Idee besteht darin, dass durch eine mindestens teilweise Füllung der Nadelgasse sich ein erhöhter Füllgrad ergibt. Dadurch ergibt sich eine erhöhte Leistungsdichte der elektrischen Maschine. Je nach Füllgrad der Nadelgasse kann so eine deutliche Leistungssteigerung von z.B. etwa 30% ermöglicht werden.

Durch die erfindungsgemäße Lösung ergibt sich zudem ein deutlicher höherer Wirkungsgrad der elektrischen Maschine, da der gleich magnetische Fluss mit kürzerer verlegter Drahtlänge möglich wird. So verringern sich auch die ohmschen Verluste bei gleicher Motorleistung. Eine elektrische Maschine mit einer bestimmten Nennleistung kann somit kleiner, leichter und kostengünstiger bereitstellen.

Vorzugsweise sind zwei oder mehr als zwei Wicklungslagen vorgesehen. Es ist aber grundsätzlich auch möglich, wenn nur eine Wicklungslage vorgesehen ist und diese sofort als acht ausgeführt ist.

Vorteilhafte Ausgestaltungen und Weiterbildungen ergeben sich aus den weiteren Unteransprüchen sowie aus der Beschreibung unter Bezugnahme auf die Figuren der Zeichnung.

Erfindungsgefäß ist eine letzte Wicklungslage der mindestens zwei Wicklungslagen um die benachbarten Zähne in Form einer Acht herumgewickelt, wobei ein Kreuzungsabschnitt in der Nadelgasse gebildet ist, welcher die Nadelgasse nutzbar macht.

Der Stator kann in einer bevorzugten Ausführung zwölf Nuten aufweisen. Denkbar und vorteilhaft wäre aber auch ein Stator mit achtzehn oder allgemein mit 12+n*6 Nuten. n bezeichnet dabei ein natürliche gerade Zahl größer Null. Aber auch andere Ausgestaltungen der Statoren und der Anzahl der Nuten können möglich und vorteilhaft sein.

Die mindestens zwei Wicklungen weisen vorzugsweise einen entgegen gesetzten Wicklungssinn auf.

Die erste Wicklung der mindestens zwei Wicklungen kann durch eine Drahtbrücke des Wicklungsdrahts mit der zweiten der mindestens zwei Wicklungen verbunden werden. Damit ist ein durchgängiges Wickeln beider Wicklungen möglich.

In einer Ausführung kann das Verfahren mit einem Nadelwickler mit mindestens einer Nadel durchgeführt werden.

Es ist auch möglich, dass der Nadelwickler mit mindestens zwei Nadeln synchron wickelt. Dadurch wird ein noch höherer Füllgrad der elektrischen Maschine erreicht. Bei einem Stator mit zwölf Nuten kann ein Nadelwickler mit sechs Nadeln synchron wickeln. Dadurch ist eine besonders hohe Befüllung der Nadelgassen möglich. Gleichzeitig kann dabei auch eine Produktivitätssteigerung der Nadelwickleranlage erreicht werden.

Das Verfahren kann nicht nur für Wicklungsträger einer elektrischen Maschine verwendet werden, wobei der Wicklungsträger ein Stator ist. Es kann ebenfalls für Spulen von anderen Wicklungsträgern zur Anwendung kommen.

Eine solche elektrische Maschine kann kleiner und leichter sein. Dies ist besonders für Antriebszwecke von vielen unterschiedlichen Funktionseinheiten (automatisiertes Getriebe, Fensterheber, Verstellantriebe aller Art, usw.) in Kraftfahrzeugen der Fall. Insbesondere bei Kraftfahrzeugen, die eine Vielzahl solcher elektrischer Maschinen verwenden, macht sich der Gewichtsreduzierung besonders vorteilhaft bemerkbar, was letztlich zur Verringerung des CO₂-Ausstoßes beiträgt.

Ein weiteres Einsatzgebiet derartiger elektrischer Maschinen können Fahrräder sein, zum Beispiel deren Lichtmaschine (Dynamo).

Die obigen Ausgestaltungen und Weiterbildungen der Erfindung lassen sich auf beliebige Art und Weise miteinander kombinieren.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnungen angegebenen Ausführungsbeispiele näher erläutert. Es zeigen dabei:
- Fig. 1: eine schematische Draufsicht auf eine elektrische Maschine;
- Fig. 2: eine beispielhafte, im Querschnitt abgewickelte schematische Wicklungsverteilung der elektrischen Maschine nach Fig. 1;
- Fig. 3: eine schematische Darstellung zweier Wicklung um ein Zahnpaar der Wicklungsverteilung nach Fig. 2;
- Fig. 4: ein erstes Ausführungsbeispiel einer, im Querschnitt abgewickelten schematischen Wicklungsverteilung der elektrischen Maschine nach Fig. 1 gemäß der Erfindung;
- Fig. 5: eine schematische Darstellung zweier erfindungsgemäßer Wicklungen um ein Zahnpaar der Wicklungsverteilung nach Fig. 4;
- Fig. 6: ein zweites Ausführungsbeispiel einer, im Querschnitt abgewickelten schematischen Wicklungsverteilung der elektrischen Maschine nach Fig. 1 gemäß der Erfindung.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts Anderes ausführt ist - jeweils mit denselben Bezugszeichen versehen.

### BESCHREIBUNG VON AUSFÜHRUNGSBEISPIELEN

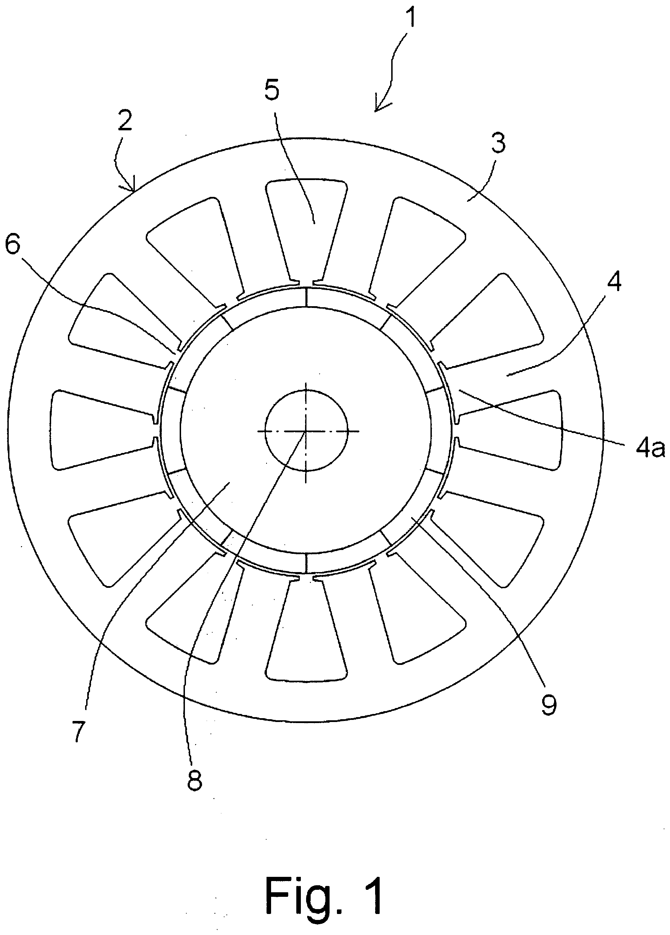

In Fig. 1 ist eine schematische Draufsicht auf eine elektrische Maschine 1 dargestellt.

Die elektrische Maschine 1 ist in diesem Beispiel als bürstenloser Permanentmagnetmotor aufgebaut und weist einen Stator 2 mit einem umlaufenden Joch 3 auf, an welchem radial nach innen weisende Zähne 4 angebracht sind. Die Zähne 4 werden auch als Einzelzähne bezeichnet. Die innen liegenden Zahnenden sind hier als Zahnköpfe 4a bezeichnet. Der Stator 2 mit den Zähnen 4 bildet einen Wicklungsträger für Spulen. Zwischen zwei Zähnen sind jeweils Wicklungskammern 5 für Wicklungen bzw. Spulen aus Wicklungsdraht jeweils um einen Zahn 4 festgelegt, die weiter unten noch erläutert werden. Die Wicklungsräume 5 erstrecken sich senkrecht zur Zeichnungsebene und verjüngen sich radial nach innen, wobei zwischen zwei innen liegenden Zahnköpfen 4a jeweils eine Nut 6 angeordnet ist. Die Zähne 4 umgeben einen Rotor 7, welcher innerhalb des Stators 2 um eine Rotorachse 8 drehbar angeordnet ist. Der Rotor 7 weist an seiner Umfangsfläche Magnete 9 mit wechselnden Magnetpolen auf.

Die Anzahl der Zähne 4 des Stators 2 beträgt in diesem Beispiel zwölf. Statorvarianten sind z.B. mit 18, 24 bzw. 12+(n*6) Nuten möglich.

Die elektrische Maschine 1 ist für eine mindestens einphasige Wicklung vorgesehen. In dem hier gezeigten Beispiel ist sie dreiphasig mit Wicklungssträngen u, v, w ausgeführt. Die Wicklung des Stators 2 bzw. Außenstators ist durch einen Nadelwickler hergestellt.

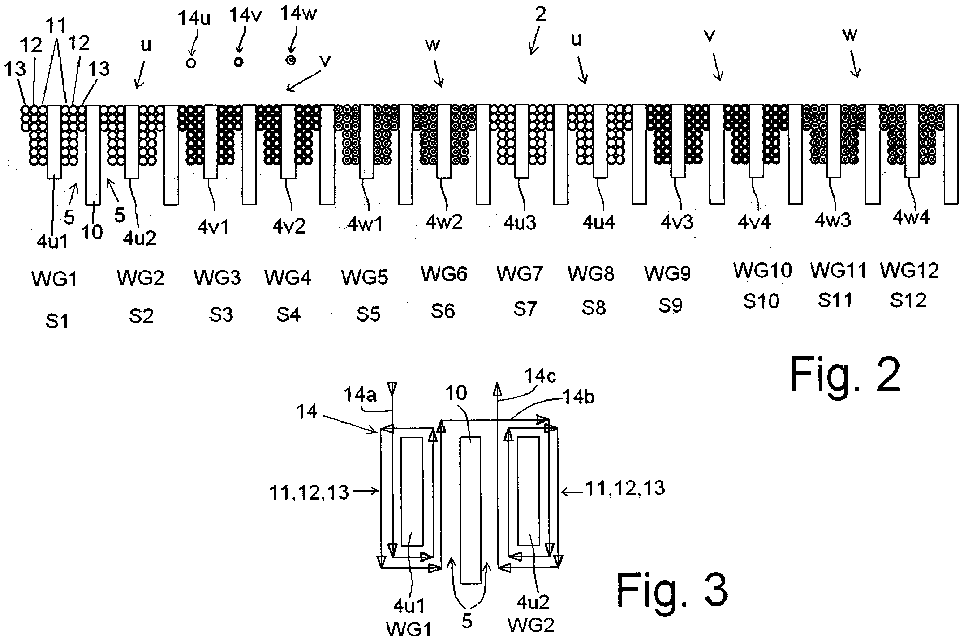

Fig. 2 zeigt eine beispielhafte, im Querschnitt abgewickelte schematische Wicklungsverteilung des Stators 2 der elektrischen Maschine 1 nach Fig. 1.

Die Wicklungen werden mit einem Nadelwickler mit einer Nadel hergestellt.

Die Zähne 4 des Stators 2 sind schematisch als längliche Rechtecke gezeigt, wobei ihr Bezug zu den drei Wicklungssträngen u, v und w in den Bezeichnungen angegeben ist. Wicklungsdrähte 14u, 14v, 14w sind durch unterschiedliche Kreismarkierungen gekennzeichnet. Jeweils ein Wicklungsdraht 14u, 14v, 14w bildet jeweils eine Wicklung WG1...12 um einen Zahn 4 von zwei Zahnpaaren in folgender Aufteilung. Der Wicklungsdraht 14u bildet eine erste Wicklung WG1 um einen Zahn 4u1 und eine in Reihe dazu angeordnete zweite Wicklung WG2 um einen daneben angeordneten Zahn 4u2. Darauf bildet der Wicklungsdraht 14u eine dritte Wicklung WG7 um einen 150° versetzten Zahn 4u3 eine vierte Wicklung WG8 um einen daneben angeordneten Zahn 4u4.

In ähnlicher Weise bildet der Wicklungsdraht 14v eine erste Wicklung WG3 um einen Zahn 4v1 und eine in Reihe dazu angeordnete zweite Wicklung WG4 um einen daneben angeordneten Zahn 4v2. Darauf bildet der Wicklungsdraht 14v eine dritte Wicklung WG9 um einen 150° versetzten Zahn 4v3 eine vierte Wicklung WG10 um einen daneben angeordneten Zahn 4v4.

Ebenso bildet der Wicklungsdraht 14w eine erste Wicklung WG5 um einen Zahn 4w1 und eine in Reihe dazu angeordnete zweite Wicklung WG6 um einen daneben angeordneten Zahn 4w2. Darauf bildet der Wicklungsdraht 14w eine dritte Wicklung WG11 um einen 150° versetzten Zahn 4w3 eine vierte Wicklung WG12 um einen daneben angeordneten Zahn 4w4.

Die Zähne 4u1...2, 4v1...2, 4w1...2, 4u3...4, 4v3...4 und 4w3...4 bilden jeweils ein Zahnpaar.

Jeder der Wicklungsstränge u, v, w weist somit eine Reihenschaltung von vier Einzelwicklungen auf.

Die Wicklungen WG1...12 sind in den Wicklungskammern 5 angeordnet. Dabei ist jede Wicklungskammer 5 von zwei Wicklungsabschnitten belegt. Zwischen den Wicklungsabschnitten befindet sich jeweils ein Freiraum, der als Nadelgasse 10 bezeichnet wird und hier als längliches Rechteck gezeigt ist. Die Nadelgassen 10 sind für die Wickelnadel des Nadelwicklers zur Herstellung der Wicklungen WG1...12 erforderlich. Mit den Bezeichnungen S1...S12 sind einzelne Schritte zur Wicklungsherstellung gekennzeichnet. Die Breite einer Nadelgasse 10 ist von der Anzahl der Nadeln eines Nadelwicklers abhängig. Im gezeigten Beispiel in Fig. 2 kommt ein Nadelwickler mit nur einer Nadel zur Anwendung.

Jede der Wicklungen WG1...12 besteht hier aus drei Wicklungslagen 11, 12, 13, die übereinander liegen. Je nach Ausgestaltung können es weniger oder auch mehr Lagen sein. Erste und zweite Wicklungslagen 11, 12 erstrecken sich über mehr als drei Viertel des jeweiligen Zahns 4. Die dritte, d.h. hier die letzte und obere Wicklungslage 3 ist nur zu einem Teil aufgrund der Gestalt der Wicklungskammer 5 (siehe Fig. 1) ausgebildet.

Fig. 3 zeigt eine schematische Darstellung der Wicklungen WG1 und WG2 um das Zahnpaar 4u1, 4u2 der Wicklungsverteilung nach Fig. 2.

Ein Wicklungsdraht 14 mit einem Drahtanfang 14a wird in einem ersten Wicklungssinn, hier im Gegenuhrzeigersinn, um den ersten Zahn 4u1 mit den drei Lagen 11, 12, 13 gewickelt. Dabei wird die Wickelkammer 5 zwischen dem Zahn 4u1 und der Nadelgasse 10 mit einem Wicklungsabschnitt der ersten Wicklung WG1 angefüllt. Der Wicklungsdraht 14 wird dann als Drahtbrücke 14b zum daneben liegenden Zahn 4u2 weitergeführt und um diesen mit drei Lagen 11, 12, 13 im Uhrzeigersinn gewickelt, wobei die Wickelkammer 5 zwischen dem Zahn 4u2 und der Nadelgasse 10 mit einem Wicklungsabschnitt der zweiten Wicklung WG2 angefüllt wird, so dass noch die Nadelgasse 10 bestehen bleibt. Der Wicklungsdraht 14 wird aus der Wicklungskammer 5 mit einem Drahtende 14c heraus und zum nächsten zugehörigen Zahnpaar 4u3, 4u4 geführt. Bei einem solchen Wickelvorgang bewegt sich die Nadel des Nadelwicklers durch die Nadelgasse 10.

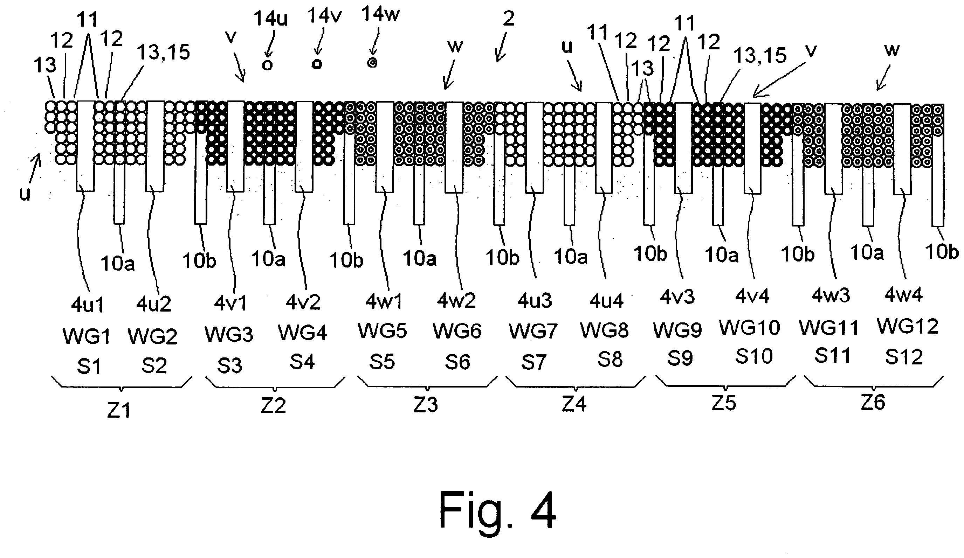

In Fig. 4 ist ein erstes Ausführungsbeispiel einer, im Querschnitt abgewickelten schematischen Wicklungsverteilung der elektrischen Maschine 1 nach Fig. 1 gemäß der Erfindung dargestellt.

Die Wicklungen werden mit einem Nadelwickler mit einer Nadel hergestellt.

Im Gegensatz zu der Wicklungsverteilung nach Fig. 2 sind in dem ersten Ausführungsbeispiel sechs Nadelgassen 10a und sechs halbe Nadelgassen 10b mit Wicklungen gefüllt. Hierbei wird jeweils die letzte Wicklungslage 13 bei einem Zahnpaar 4u1...2, 4v1...2, 4w1...2, 4u3...4, 4v3...4 und 4w3...4 nach Ausführung von jeweils zwei Schritten S1...2, S3...4, S5...6, S7...8, S9...10, S11...12 mittels eines jeweiligen Zwischenschrittes Z1...12 so gewickelt, dass sich zwischen den Zähnen eines Zahnpaares 4ul...2, 4v1...2, 4w1...2, 4u3...4, 4v3...4 und 4w3...4 eine vollständig gefüllte Nadelgasse 10a ergibt. Die jeweilige Nadelgasse 10b zwischen den Zahnpaaren 4u1...2, 4v1...2, 4w1...2, 4u3...4, 4v3...4 und 4w3...4 wird dabei halb gefüllt.

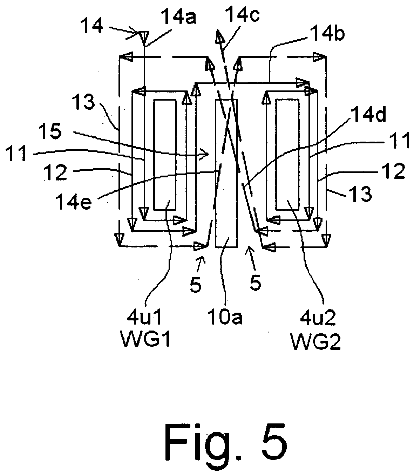

Hierzu zeigt Fig. 5 eine schematische Darstellung zweier erfindungsgemäßer Wicklungen WG1, WG2 um das Zahnpaar 4u1, 4u2 der Wicklungsverteilung nach Fig. 4.

Gemäß einem erfindungsgemäßen Verfahren wird in einem ersten Verfahrensschritt der Wicklungsdraht 14 mit einem Drahtanfang 14a in einem ersten Wicklungssinn, hier im Gegenuhrzeigersinn, um den ersten Zahn 4u1 mit zwei Lagen 11 und 12 gewickelt. Dabei wird die Wickelkammer 5 zwischen dem Zahn 4u1 und der Nadelgasse 10a mit einem Wicklungsabschnitt der ersten Wicklung WG1 angefüllt. Der Wicklungsdraht 14 wird dann in einem zweiten Verfahrensschritt als Drahtbrücke 14b zum daneben liegenden Zahn 4u2 weitergeführt und um diesen mit zwei Lagen 11 und 12 im Uhrzeigersinn gewickelt, wobei die Wickelkammer 5 zwischen dem Zahn 4u2 und der Nadelgasse 10a mit einem Wicklungsabschnitt der zweiten Wicklung WG2 angefüllt wird, so dass noch die Nadelgasse 10a bestehen bleibt.

Der Wicklungsdraht 14 wird darauf in einem dritten Verfahrensschritt als dritte bzw. letzte Wicklungslage 13 (gestrichelt dargestellt) sowohl um den zweiten Zahn 4u2 als auch um den ersten Zahn 4u1 in Form einer Acht gewickelt. Dabei wird der Wicklungsdraht 14 vom zweiten Zahn 4u2 nach Beendigung der zweiten Wicklungslage 12 der zweiten Wicklung WB2 des zweiten Zahns 4u2 mit einem ersten Kreuzungsabschnitt 14d durch die Wicklungskammer 5 durch die Nadelgasse 10a wieder zurück in Richtung auf den Drahtanfang 14a an dem ersten Zahn 4u1 geführt und im Gegenuhrzeigersinn weiter um den ersten Zahn 4u1 bis zur Nadelgasse 10a herumgeführt. Die Nadelgasse 10a wird nun von einem zweiten Kreuzungsabschnitt 14e des Wicklungsdrahts 14 durchlaufen, wobei der Wicklungsdraht 14 mit dem zweiten Kreuzungsabschnitt 14e den ersten Kreuzungsabschnitt 14d in der Nadelgasse 10 kreuzt. Der Wicklungsdraht 14 wird dann weiter im Uhrzeigersinn um den zweiten Zahn 4u2 zur Vollendung der Form einer Acht gewickelt. Dieser Vorgang des Wickelns einer Acht um beide Zähne des Zahnpaares 4ul...2 wiederholt sich bis die dritte bzw. letzte Wicklungslage 13 vollständig ist. Die Kreuzungsabschnitte 14d, 14e füllen die Nadelgasse 10a vollständig und bilden einen Kreuzungsabschnitt 15. Dann wird der Wicklungsdraht 14 aus der Wicklungskammer 5 mit dem Drahtende 14c heraus und zum nächsten zugehörigen Zahnpaar 4u3, 4u4 geführt.

Dieses Verfahren findet an allen Zahnpaaren 4ul...2, 4vl...2, 4w1...2, 4u3...4, 4v3...4 und 4w3...4 statt.

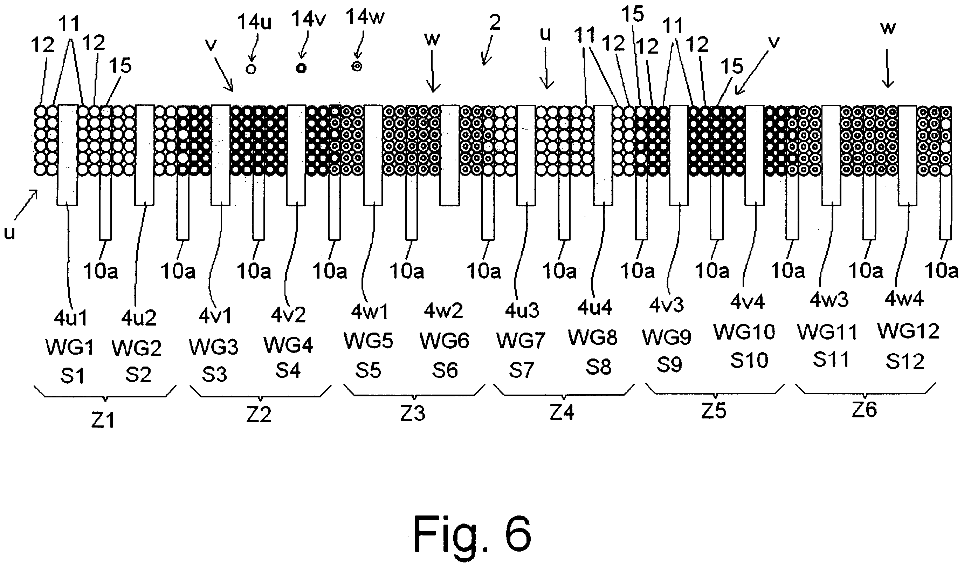

Fig. 6 stellt ein zweites Ausführungsbeispiel einer, im Querschnitt abgewickelten schematischen Wicklungsverteilung der elektrischen Maschine 1 nach Fig. 1 gemäß der Erfindung dar. Im Gegensatz zu dem ersten Ausführungsbeispiel nach Fig. 4 sind hierbei alle Nadelgassen 10a vollständig gefüllt. Dies wird dadurch erreicht, dass die Wicklungen mit einem Nadelwickler hergestellt werden, welcher mit sechs Nadeln ausgerüstet ist. Durch ein synchrones Wickeln mit den sechs Nadeln werden alle Nadelgassen 10a gefüllt und weisen jeweils den Kreuzungsabschnitt 15 auf. Drei der sechs Nadeln weisen dabei einen Wickelsinn im Uhrzeigersinn und drei im Gegenuhrzeigersinn auf.

Obgleich die vorliegende Erfindung vorstehend anhand eines bevorzugten Ausführungsbeispiels erläutert wurde, sei sie nicht darauf beschränkt, sondern lässt sich auf beliebige Art und Weise modifizieren, ohne vom Gegenstand der vorliegenden Erfindung abzuweichen.

Es kann auch möglich sein, dass mehr als vier Wicklungen pro Wicklungsstrang u, v, w verwendet werden, zum Beispiel sechs, acht, zehn usw. Natürlich kann nur ein Wicklungsstrang (einphasig) u, v, w oder es können auch mehr als drei Wicklungsstränge u, v, w hergestellt werden.

Die Wicklungen können mit einem Nadelwickler mit einer oder mehr Nadeln hergestellt werden. Selbstverständlich kann das Wickelverfahren auch bei anderen Nutzahlen als dargestellt zur Anwendung kommen.

Es ist auch denkbar, dass nicht nur Wicklungen wie gezeigt, sondern auch andere Arten anstelle von Außenstatoren, z.B. Rotoren, hergestellt werden können.

Je nach Anzahl der Nadeln und Ausführung des Nadelwicklers sind die Nadelgassen 10, 10a, 10b in ihrer Breite entsprechend ausgeführt.

Es ist weiterhin denkbar, dass nicht nur zwei sondern auch mehrere benachbarte Zähne mit in Reihe liegenden bzw. geschalteten Wicklungen mit dem Verfahren bewickelt werden können, wobei die letzte Wicklungslage in Doppel-, Dreifach- oder Mehrfach-Achtform ausgeführt werden kann. So werden zum Beispiel bei drei benachbarten Zähnen die zwei Nadelgassen 10a jeweils mit einem Kreuzungsabschnitt 15 gefüllt.

### Bezugszeichenliste

- 1: Elektrische Maschine
- 2: Stator
- 3: Joch
- 4: Zahn
- 4u1...u4: Zähne
- 4v1...4: Zähne
- 4w1...4: Zähne
- 4a: Zahnkopf
- 5: Wicklungskammer
- 6: Nut
- 7: Rotor
- 8: Rotorachse
- 9: Magnet
- 10 - 10b: Nadelgassen
- 11: Erste Wicklungslage
- 12: Zweite Wicklungslage
- 13: Dritte Wicklungslage
- 14: Wicklungsdraht
- 14a: Drahtanfang
- 14b: Drahtbrücke
- 14c: Drahtende
- 14d: Erster Kreuzungsabschnitt
- 14e: Zweiter Kreuzungsabschnitt
- 14u: Wicklungsdraht u-Wicklung
- 14v: Wicklungsdraht v-Wicklung
- 14w: Wicklungsdraht w-Wicklung
- 15: Kreuzungsabschnitt

- S1 - S2: Schritte
- u, v, w: Wicklungsstränge
- WG1...12: Wicklungen
- Z1 - 12: Zwischenschritte

## Patentansprüche

1. Elektrische Maschine (1), insbesondere bürstenloser Permanentmagnetmotor,
mit einem Stator (2), der mehrere Zähne (4) mit mindestens einem nadelgewickelten Wicklungsstrang (u, v, w) aufweist,
- wobei der mindestens eine Wicklungsstrang (u, v, w) mindestens zwei Wicklungen (WG1...2, WG7...8; WG3...4, WG9...10; WG5...6, WG11...12) auf benachbarten Zähnen (4) aufweist, die in Reihenschaltung angeordnet sind,
- wobei die mindestens zwei Wicklungen (WG1...2, WG7...8; WG3...4, WG9...10; WG5...6, WG11...12) jeweils mindestens eine Wicklungslage (11, 12, 13) aufweisen,
- wobei eine Nadelgasse (10, 10a, 10b) vorgesehen ist, die zwischen den mindestens zwei Wicklungen (WG1...2, WG7...8; WG3...4, WG9...10; WG5...6, WG11...12) durch einen Kreuzungsabschnitt (15) der mindestens zwei Wicklungen (WG1...2, WG7...8; WG3...4, WG9...10; WG5...6, WG11...12) gebildet ist und die mindestens teilweise gefüllt ist,
**dadurch gekennzeichnet, dass**
- eine letzte Wicklungslage (13) der mindestens zwei Wicklungslagen (11, 12, 13) um die benachbarten Zähne (4) in Form einer vollendeten Acht herumgewickelt ist, wobei ein Kreuzungsabschnitt (15) in der Nadelgasse (10, 10a, 10b) durch sich kreuzende erste Kreuzungsabschnitte (14d) und zweite Kreuzungsabschnitte (14e) gebildet ist.

2. Elektrische Maschine (1) nach Anspruch,
**dadurch gekennzeichnet,**
**dass** der Stator (2) zwölf, oder 12+n*6 Nuten (6) aufweist, wobei n eine natürliche Zahl bezeichnet.

3. Elektrische Maschine (1) nach einem der vorhergehenden Ansprüche,
**dadurch gekennzeichnet,**
**dass** die mindestens zwei Wicklungen (WG1...2, WG7...8; WG3...4, WG9...10; WG5...6, WG11...12) einen entgegengesetzten Wicklungssinn aufweisen.

4. Verfahren zum Wickeln einer Spule einer elektrischen Maschine (1), insbesondere eines bürstenlosen Permanentmagnetmotors, mittels eines Nadelwicklers, mit den Verfahrensschritten:
(S0) Bereitstellen einer Spule eines mehrere Zähne (4) aufweisenden Wicklungsträgers, wobei die Spule mindestens zwei Wicklungen (WG1...2, WG7...8, WG9...10; WG5...6, WG11...12) auf benachbarten Zähnen (4) aufweist, die in Reihenschaltung angeordnet sind und wobei die mindestens zwei Wicklungen (WG1...2, WG7...8, WG9...10; WG5...6, WG11...12) jeweils mindestens eine Wicklungslage (11, 12, 13) aufweisen;
(S1) Herstellen der jeweils mindestens einen Wicklungslage (11, 12, 13) einer ersten der mindestens zwei Wicklungen (WG1...2, WG7...8; WG3...4, WG9...10; WG5...6, WG11...12) durch Wickeln eines Wicklungsdrahts (14) um einen ersten Zahn (4);
(S2) Herstellen der jeweils mindestens einen Wicklungslage (11, 12, 13) einer zweiten der mindestens zwei Wicklungen (WG1...2, WG7...8; WG3...4, WG9...10; WG5...6, WG11...12) durch Wickeln des Wicklungsdrahts (14) um einen zweiten Zahn (4);
**gekennzeichnet durch**:
(S3) Herstellen der letzten Wicklungslage (13) durch Wickeln des Wicklungsdrahts (14) sowohl um den zweiten Zahn (4) als auch um den ersten Zahn (4) in Form einer vollendeten Acht, dergestalt, dass der Wicklungsdraht (14) von dem zweiten Zahn (4) mit einem ersten Kreuzungsabschnitt (14d) durch eine Nadelgasse (10, 10a, 10b) wieder zurück in Richtung auf einen Drahtanfang (14a) an dem ersten Zahn (4) geführt und im Gegenuhrzeigersinn weiter um den ersten Zahn (4) bis zu der Nadelgasse (10, 10a, 10b) herumgeführt wird, wobei die Nadelgasse (10, 10a, 10b) dann von einem zweiten Kreuzungsabschnitt (14e) des Wicklungsdrahts (14) durchlaufen wird und der zweite Kreuzungsabschnitt (14e) den ersten Kreuzungsabschnitt (14d) in der Nadelgasse (10, 10a, 10b) unter Bildung eines Kreuzungsabschnitts (15) kreuzt und dann weiter im Uhrzeigersinn um den zweiten Zahn (4) zur Vollendung der Form einer Acht gewickelt wird.

5. Verfahren nach einem der vorherigen verfahrensbezogenen Ansprüche,
**dadurch gekennzeichnet,**
**dass** die erste Wicklung der mindestens zwei Wicklungen (WG1...2, WG7...8; WG3...4, WG9...10; WG5...6, WG11...12) durch eine Drahtbrücke (14b) des Wicklungsdrahts (14) mit der zweiten der mindestens zwei Wicklungen (WG1...2, WG7...8; WG3...4, WG9...10; WG5...6, WG11...12) verbunden wird.

6. Verfahren nach einem der vorherigen verfahrensbezogenen Ansprüche,
**dadurch gekennzeichnet,**
**dass** die mindestens zwei Wicklungen (WG1...2, WG7...8; WG3...4, WG9...10; WG5...6, WG11...12) mit unterschiedlichem Wicklungssinn gewickelt werden.

7. Verfahren nach einem der vorherigen verfahrensbezogenen Ansprüche,
**dadurch gekennzeichnet,**
**dass** der Nadelwickler mit mindestens einer Nadel wickelt oder mit mindestens zwei Nadeln synchron wickelt.

8. Verfahren nach einem der Ansprüche 4 bis 7,
**dadurch gekennzeichnet,**
**dass** der Wicklungsträger der elektrischen Maschine (1) als Stator (2) der elektrischen Maschine (1) ausgebildet ist.

## Claims

1. Electrical machine (1), in particular brushless permanent magnet motor,
- comprising a stator (2), which has a plurality of teeth (4) comprising at least one needle-wound winding strand (u, v, w),
- the at least one winding strand (u, v, w) having at least two windings (WG1...2, WG7...8; WG3...4, WG9...10; WG5...6, WG11...12) on adjacent teeth (4), which are arranged connected in series,
- the at least two windings (WG1...2, WG7...8; WG3...4, WG9...10; WG5...6, WG11...12) each having at least one winding layer (11, 12, 13),
- a needle path (10, 10a, 10b) being provided, which is formed between the at least two windings (WG1...2, WG7...8; WG3...4, WG9...10; WG5...6, WG11...12) through a crossing portion (15) of the at least two windings (WG1...2, WG7...8; WG3...4, WG9...10; WG5...6, WG11...12) and is filled at least in part,
**characterised in that**
- a final winding layer (13) of the at least two winding layers (11, 12, 13) is wound around the adjacent teeth (4) in a complete figure of eight, a crossing portion (15) in the needle path (10, 10a, 10b) being formed by first crossing portions (14d) and second crossing portions (14e) which cross one another.

2. Electrical machine (1) according to claim,
**characterised in that**
the stator (2) has twelve or 12+n*6 grooves (6), where n is a natural number.

3. Electrical machine (1) according to any of the preceding claims,
**characterised in that**
the at least two windings (WG1...2, WG7...8; WG3...4, WG9...10; WG5...6, WG11...12) have an opposite winding direction.

4. Method for winding a coil of an electrical machine (1), in particular a brushless permanent magnet motor, using a needle winder, comprising the method steps of:
(S0) providing a coil of a winding carrier which has a plurality of teeth (4), the coil having at least two windings (WG1...2, WG7...8; WG3...4, WG9...10; WG5...6, WG11...12) on adjacent teeth (4), which are arranged connected in series, and the at least two windings (WG1...2, WG7...8; WG3...4, WG9...10; WG5...6, WG11...12) each having at least one winding layer (11, 12, 13);
(S1) producing the at least one winding layer (11, 12, 13) in each case of a first of the at least two windings (WG1...2, WG7...8; WG3...4, WG9...10; WG5...6, WG11...12) by winding a winding wire (14) around a first tooth (4);
(S2) producing the at least one winding layer (11, 12, 13) in each case of a second of the at least two windings (WG1...2, WG7...8; WG3...4, WG9...10; WG5...6, WG11...12) by winding the winding wire (14) around a second tooth (4) ;
**characterised by**:
(S3) producing the final winding layer (13) by winding the winding wire (14) both around the second tooth (4) and around the first tooth (4) in a complete figure of eight, in such a way that the winding wire (14) is guided, with a first crossing portion (14d), from the second tooth (4) through a needle path (10, 10a, 10b) back towards a wire start (14a) on the first tooth (4) again, and guided onwards anticlockwise around the first tooth (4) as far as the needle path (10, 10a, 10b), the needle path (10, 10a, 10b) subsequently being passed through by a second crossing portion (14e) of the winding wire (14), and the second crossing portion (14e) crossing the first crossing portion (14d) in the needle path (10, 10a, 10b) to form a crossing portion (15) and subsequently being wound onwards anticlockwise around the second tooth (4) to complete the figure of eight.

5. Method according to any of the preceding method claims,
**characterised in that**
the first winding of the at least two windings (WG1...2, WG7...8; WG3...4, WG9...10; WG5...6, WG11...12) is connected via a wire bridge (14b) of the winding wire (14) to the second of the at least two windings (WG1...2, WG7...8; WG3...4, WG9...10; WG5...6, WG11...12).

6. Method according to any of the preceding method claims,
**characterised in that**
the at least two windings (WG1...2, WG7...8; WG3...4, WG9...10; WG5...6, WG11...12) are wound in different winding directions.

7. Method according to any of the preceding method claims,
**characterised in that**
the needle winder winds using at least one needle or using at least two needle synchronously.

8. Method according to any of claims 4 to 7,
**characterised in that**
the winding carrier of the electrical machine (1) is formed as a stator (2) of the electrical machine (1).

## Revendications

1. Machine électrique (1), en particulier moteur à aimant permanent sans balais,
comportant un stator (2) qui présente plusieurs dents (4) avec au moins une phase d'enroulement (u, v, w) enroulée par aiguille,
- dans laquelle ladite au moins une phase d'enroulement (u, v, w) présente au moins deux enroulements (WG1...2, WG7...8 ; WG3...4, WG9...10, WG5...6, WG11...12) sur des dents adjacentes (4), qui sont disposés en série,
- dans laquelle lesdits au moins deux enroulements (WG1...2, WG7...8; WG3...4, WG9...10 ; WG5...6, WG11...12) présentent chacun au moins une couche d'enroulement (11, 12, 13),
- dans laquelle il est prévu un couloir d'aiguille (10, 10a, 10b) qui est formé entre lesdits au moins deux enroulements (WG1...2, WG7...8 ; WG3...4, WG9...10 ; WG5...6, WG11...12) par une partie de croisement (15) desdits au moins deux enroulements (WG1...2, WG7...8; WG3...4, WG9...10 ; WG5...6, WG11...12) et qui est au moins partiellement rempli,
**caractérisé en ce que**
- une dernière couche d'enroulement (13) desdites au moins deux couches d'enroulement (11, 12, 13) est enroulée autour des dents adjacentes (4) sous la forme d'un huit complet, une partie de croisement (15) étant formée dans le couloir d'aiguille (10, 10a, 10b) par le croisement de premières parties de croisement (14d) et de deuxièmes parties de croisement (14e).

2. Machine électrique (1) selon la revendication,
**caractérisée en ce**
**que** le stator (2) présente douze ou 12+n*6 encoches (6), n désignant un nombre naturel.

3. Machine électrique (1) selon l'une des revendications précédentes,
**caractérisée en ce**
**que** lesdits au moins deux enroulements (WG1...2, WG7...8; WG3...4, WG9...10 ; WG5... 6, WG11...12) présentent un sens d'enroulement opposé.

4. Procédé d'enroulement d'une bobine d'une machine électrique (1), en particulier d'un moteur à aimant permanent sans balais, au moyen d'un enrouleur à aiguille, comprenant les étapes suivantes :
(S0) fourniture d'une bobine d'un support d'enroulement présentant plusieurs dents (4), la bobine présentant au moins deux enroulements (WG1...2, WG7...8, WG9...10 ; WG5...6, WG11...12) sur des dents adjacentes (4), qui sont disposés en série et lesdits au moins deux enroulements (WG1...2, WG7...8, WG9...10 ; WG5...6, WG11...12) présentant chacun au moins une couche d'enroulement (11, 12, 13) ;
(S1) réalisation de ladite au moins une couche d'enroulement respective (11, 12, 13) d'un premier desdits au moins deux enroulements (WG1...2, WG7...8; WG3...4, WG9...10 ; WG5...6, WG11...12) par enroulement d'un fil d'enroulement (14) autour d'une première dent (4) ;
(S2) réalisation de ladite au moins une couche d'enroulement respective (11, 12, 13) d'un deuxième desdits au moins deux enroulements (WG1...2, WG7...8; WG3...4, WG9...10 ; WG5...6, WG11...12) par enroulement du fil d'enroulement (14) autour d'une deuxième dent (4) ;
**caractérisé par** :
(S3) réalisation de la dernière couche d'enroulement (13) par enroulement du fil d'enroulement (14) à la fois autour de la deuxième dent (4) et de la première dent (4) sous la forme d'un huit complet de telle sorte que le fil d'enroulement (14) est guidé depuis la deuxième dent (4) avec une première partie de croisement (14d) à travers un couloir d'aiguille (10, 10a, 10b) puis revient en direction d'un début de fil (14a) sur la première dent (4) et continue ensuite dans le sens inverse des aiguilles d'une montre autour de la première dent (4) jusqu'au couloir d'aiguille (10, 10a, 10b), le couloir d'aiguille (10, 10a, 10b) étant ensuite parcouru par une deuxième partie de croisement (14e) du fil d'enroulement (14) et la deuxième partie de croisement (14e) croisant la première partie de croisement (14d) dans le couloir d'aiguille (10, 10a, 10b) pour former une partie de croisement (15), avant d'être enroulé dans le sens des aiguilles d'une montre autour de la deuxième dent (4) pour compléter la forme d'un huit.

5. Procédé selon l'une des revendications de procédé précédentes,
**caractérisé en ce**
**que** le premier enroulement desdits au moins deux enroulements (WG1...2, WG7...8 ; WG3...4, WG9...10 ;
WG5...6, WG11...12) est relié par un pont de fil (14b) du fil d'enroulement (14) au deuxième desdits au moins deux enroulements (WG1...2, WG7...8; WG3...4, WG9...10 ; WG5...6, WG11...12).

6. Procédé selon l'une des revendications de procédé précédentes,
**caractérisé en ce**
**que** lesdits au moins deux enroulements (WG1...2, WG7...8; WG3...4, WG9...10 ; WG5...6, WG11...12) sont enroulés dans des sens d'enroulement différents.

7. Procédé selon l'une des revendications de procédé précédentes,
**caractérisé en ce**
**que** l'enrouleur à aiguille enroule avec au moins une aiguille ou enroule de façon synchrone avec au moins deux aiguilles.

8. Procédé selon l'une des revendications 4 à 7,
**caractérisé en ce**
**que** le support d'enroulement de la machine électrique (1) est réalisé sous la forme d'un stator (2) de la machine électrique (1).
